(19) Europäisches Patentamt
European Patent Office
Office européen des brevets

(11) **EP 0 880 015 B1**

(12) **FASCICULE DE BREVET EUROPEEN**

(45) Date de publication et mention
de la délivrance du brevet:
**11.07.2007 Bulletin 2007/28**

(51) Int Cl.:
***G01F 15/04*** *(2006.01)*

(21) Numéro de dépôt: **98401219.5**

(22) Date de dépôt: **20.05.1998**

(54) **Dispositif compact de comptage de gaz à pression variable**

Kompaktes Messgerät zur Messung der Gasströmung bei variablem Druck

Compact meter for measuring gas flow at variable pressure

(84) Etats contractants désignés:
**AT BE CH DE DK ES FI FR GB GR IE IT LI LU MC NL PT SE**

(30) Priorité: **23.05.1997 FR 9706297**

(43) Date de publication de la demande:
**25.11.1998 Bulletin 1998/48**

(73) Titulaire: **GAZ DE FRANCE**
**75017 Paris (FR)**

(72) Inventeurs:
• **Cornil, Jean-Pierre**
**78800 Houilles (FR)**
• **Dutertre, Dominique**
**75013 Paris (FR)**
• **Mode, Laurent**
**75015 Paris (FR)**
• **De Laharpe, Vincent**
**92370 Chaville (FR)**

(74) Mandataire: **Thévenet, Jean-Bruno et al**
**Cabinet Beau de Loménie**
**158, rue de l'Université**
**75340 Paris Cédex 07 (FR)**

(56) Documents cités:
**EP-A- 0 038 258         EP-A- 0 337 887**
**FR-A- 2 717 536         US-A- 4 270 577**
**US-A- 5 363 699**

EP 0 880 015 B1

**Description**

La présente invention a pour objet un dispositif compact de comptage de gaz à pression variable, pour le comptage du volume de gaz circulant dans une conduite, en aval d'un détendeur-régulateur, comprenant successivement un redresseur d'écoulement, un compteur de vitesse et un limiteur de débit silencieux.

L'invention concerne plus particulièrement un dispositif applicable à un poste de distribution de gaz assurant les fonctions de détente et régulation de la pression de livraison du gaz et de comptage des volumes de gaz distribués.

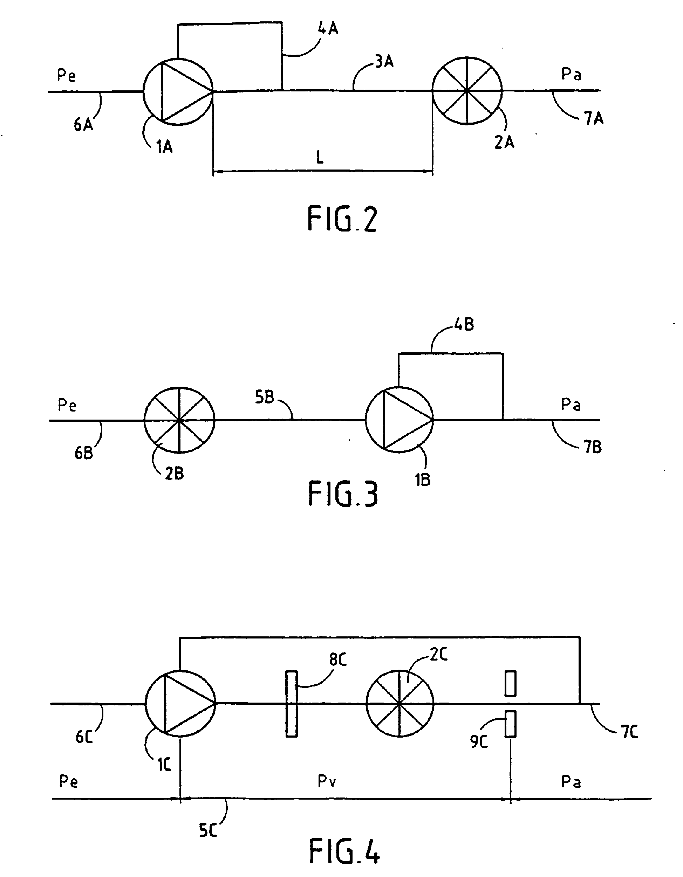

Selon une solution classique, illustrée sur la figure 2, le gaz circulant dans une conduite 6A à la pression amont Pe est détendu de la pression amont Pe à une pression aval régulée Pa, dans un détendeur-régulateur 1A, qui reçoit une impulsion de commande par une ligne 4A prenant naissance dans un tronçon de conduite 3A situé en aval du détendeur-régulateur 1A. Un compteur 2A est disposé entre le tronçon de conduite 3A et une conduite aval de distribution 7A. le compteur 2A assure le comptage du volume de gaz consommé, à la pression aval Pa qui ne dépend que du point de consigne fixé au régulateur 1A, qui va s'efforcer de garder cette pression aval constante. Pour que le comptage soit fiable, il est nécessaire de disposer de bonnes conditions d'écoulement dans le tronçon de conduite 3A entre le détendeur-régulateur 1A et le compteur 2A. Pour cela, le tronçon de conduite 3A doit comprendre des longueurs droites L substantielles. En effet, les fortes perturbations qui existent à proximité du clapet de détente du régulateur de pression conduisent à placer le dispositif de comptage de débit de gaz à une distance par rapport au détendeur-régulateur correspondant à plusieurs fois le diamètre de la canalisation qui réunit ces deux éléments. Ceci conduit à un encombrement non négligeable.

Selon une autre solution connue, qui est illustrée sur la figure 3, un compteur de gaz 2B est installé en amont d'un détendeur-régulateur 1B, muni d'une liaison 4B avec la conduite aval 7B pour recevoir une information sur la pression aval régulée Pa. Dans ce cas, le tronçon de conduite 5B entre le compteur 2B et le détendeur-régulateur 1B peut être relativement court et le calibre du compteur 2B peut être réduit. Dans cette solution, le compteur n'est pas soumis aux perturbations engendrées par le détendeur-régulateur.

Toutefois, dans la solution A (comptage en aval de la détente) comme dans la solution B (comptage en amont de la détente), les conduites de liaison reliant l'entrée du poste ou le détendeur-régulateur de pression au compteur, tel qu'un compteur à turbine, ajoutent généralement des perturbations supplémentaires dues à la géométrie particulière des canalisations de liaison et aux accessoires éventuellement montés sur ces conduites de liaison. Le compteur de débit peut ainsi recevoir un écoulement de gaz dont le profil de vitesse est déformé ou qui subit des rotations de la veine gazeuse, ce qui est préjudiciable pour la qualité du comptage. Par ailleurs, la dynamique de comptage des postes équipés de ces façons-là, c'est-à-dire le rapport entre les débits maximum Qmax et minimum Qmin entre lesquels la métrologie légale garantit une bonne précision de comptage en basse pression, est de l'ordre de 20 à 30 pour les compteurs de volume. Ces dynamiques sont parfois trop faibles pour couvrir l'ensemble des plages de débit de certains postes de distribution publique et de certains clients industriels. Cela conduit à mal compter les faibles débits. D'autre part, les règles de dimensionnement des postes de livraison conduisent dans la plupart des cas à installer des détendeurs-régulateurs de capacité très largement supérieure, dans les conditions normales de fonctionnement, à celle des compteurs. Par conséquent, dans certaines situations, il existe un risque de détérioration du compteur par dépassement temporaire du débit maximum de celui-ci.

On a encore proposé, notamment dans le document EP-A- 0 337 887, un poste de détente intégré multifonctions pour l'alimentation en gaz d'un réseau secondaire. Dans ce cas, le détendeur-régulateur 1C, un élément redresseur 8C, un compteur 2C et un limiteur d'écoulement 9C (figure 4) sont incorporés dans un corps externe unique s'étendant sur une distance 5C et relié d'une part à une conduite amont 6C dans laquelle règne une pression amont Pe, et d'autre part à une conduite aval 7C dans laquelle règne une pression aval régulée Pa. Une liaison 4C permet d'appliquer au détendeur-régulateur 1C une impulsion de commande reflétant la pression aval Pa. Le comptage est effectué à une pression variable de comptage Pv, qui diffère de la pression aval régulée, compte tenu de la présence du limiteur de débit 9C qui introduit une perte de charge. Ceci conduit à augmenter la dynamique du compteur 2C, tout en protégeant le compteur contre d'éventuelles survitesses.

Un compteur à pression variable de ce type est intéressant par le gain de dynamique qu'il permet et par sa compacité. Toutefois, il nécessite une réalisation spécifique puisque les divers éléments du poste de détente doivent être intégrés dans un même boîtier. Ceci conduit en particulier à une réalisation spécifique et relativement complexe notamment du redresseur 8C et du limiteur 9C.

La présente invention vise à remédier aux inconvénients précités et à permettre la réalisation d'un poste de distribution de gaz et d'un dispositif de comptage de gaz qui soient compacts tout en étant modulaires, aptes à incorporer facilement des détendeurs-régulateurs classiques ou des compteurs classiques, et mettant en oeuvre des éléments de redressement de flux gazeux ou de limitation de débit dont la structure autorise une fabrication simplifiée tout en garantissant une grande robustesse et une grande sécurité de fonctionnement.

Ces buts sont atteints grâce à un dispositif compact de comptage de gaz à pression variable, pour le comptage du volume de gaz circulant dans une conduite, en aval d'un détendeur-régulateur, comprenant successivement un redresseur d'écoulement, un compteur de vitesse et un limiteur de débit silencieux, caractérisé en ce que le redresseur est adapté à être (disposé entre une bride d'une conduite amont de raccordement au détendeur - régulateur et une bride amont du compteur, en ce que le limiteur est adapté à être disposé entre une bride aval du compteur ou d'une manchette associée au compteur et une bride d'une conduite aval, en ce que le redresseur comprend une couronne support dans laquelle sont montées une première plaque perforée de trous, ainsi qu'une première plaque poreuse et une entretoise en forme de bague coopérant avec la première plaque perforée et en ce que le limiteur comprend un flasque amont définissant une deuxième plaque perforée d'un nombre défini de trous calibrés, dont la section de passage totale est très inférieure à celle de la première plaque perforée, une deuxième plaque poreuse et un flasque aval définissant une troisième plaque perforée de trous dont la section totale de passage est très supérieure à la section totale de passage de la deuxième plaque perforée du flasque amont.

Avantageusement, les trous de la première plaque perforée sont répartis de façon homogène sur toute la surface de cette première plaque.

Selon une caractéristique particulière du redresseur, la couronne support présente au voisinage de sa face aval, un épaulement formant saillie radialement vers l'intérieur de la couronne support et la première plaque perforée est placée directement en contact avec ledit épaulement.

Dans ce cas, avantageusement, la première plaque perforée, la première plaque poreuse et l'entretoise constituent un empilement venant en butée contre l'épaulement de la couronne support et la somme des épaisseurs, dans le sens axial, de la première plaque perforée, de la première plaque poreuse et de l'entretoise est légèrement supérieure à la distance, dans le sens axial, entre l'épaulement aval de la couronne support et la face amont de ladite couronne support de telle manière que le serrage de l'empilement entre la bride de la conduite amont de raccordement et la bride amont du compteur écrase légèrement la première plaque poreuse. De la sorte, on élimine toute possibilité de jeux entre les divers éléments de l'empilage.

Selon un mode de réalisation possible, la première plaque poreuse est disposée directement contre la première plaque perforée et l'entretoise en forme de bague est disposée en amont de la première plaque poreuse.

Selon un autre mode de réalisation possible, l'entretoise est disposée directement contre la première plaque perforée et la première plaque poreuse est disposée en amont de l'entretoise.

Selon un autre mode de réalisation possible, la première plaque perforée de trous répartis de façon homogène sur toute la surface de cette première plaque est constituée par la partie centrale d'un flasque amont dont la partie périphérique définit, d'une part, l'entretoise et, d'autre part, une partie amont de la couronne support, la première plaque poreuse est maintenue plaquée par l'entretoise contre une quatrième plaque perforée de trous dont la section individuelle est supérieure à celle des trous de la première plaque perforée et dont la section totale de passage est très supérieure à la section totale de passage de la première plaque perforée, et la quatrième plaque perforée est constituée par la partie centrale d'un flasque aval dont la partie périphérique définit une partie aval de la couronne support.

Selon une autre caractéristique de l'invention, le flasque amont du limiteur définit sur sa face aval une bague entretoise qui coopère avec le flasque aval du limiteur pour maintenir sans jeu la deuxième plaque poreuse plaquée contre la troisième plaque perforée du flasque aval.

De préférence, un espace libre est ménagé entre la deuxième plaque perforée et la deuxième plaque poreuse et présente dans le sens axial une épaisseur de l'ordre du double du diamètre d des trous calibrés de la deuxième plaque perforée du flasque amont.

La présence d'un espace libre entre la deuxième plaque perforée et la deuxième plaque poreuse permet un meilleur contrôle du coefficient de débit du limiteur en ce sens qu'au niveau de chaque trou, en régime critique, le poreux ne vient pas perturber l'établissement du col sonique. Des études ont montré que ce col sonique peut s'établir, dans le cas d'orifices cylindriques, à la sortie de l'orifice, dans la partie la plus resserrée de la veine gazeuse (vena contracta) à une distance de l'ordre du diamètre du trou. Le corps poreux vient ensuite en aval pour atténuer le bruit généré par les ondes de choc de recompression du gaz et par la turbulence.

Avantageusement, le redresseur présente dans le sens axial une épaisseur de l'ordre du tiers du diamètre nominal D de la conduite.

De même, le limiteur présente dans le sens axial une épaisseur de l'ordre du tiers du diamètre nominal D de la conduite.

Les première et deuxième plaques poreuses présentent une épaisseur comprise entre 5 et 20 mm, et de préférence voisine de 10 mm.

Avantageusement, les première et deuxième plaques poreuses sont constituées par une mousse de nickel-chrome très aérée dont la densité est de l'ordre de 0,6 g/cm$^3$ et dont le rapport entre le volume occupé et le volume total est de l'ordre de 6%.

Selon une autre caractéristique particulière de l'invention, le nombre n de trous calibrés de la deuxième plaque perforée est déterminé par une valeur approchée du rapport Q/q entre le coefficient de débit global Q du limiteur, qui est inférieur ou égal au débit nominal du compteur, et le coefficient de débit q d'un trou calibré, qui est déterminé par la formule

$$q = KS \sqrt{Tc \ Po/2\rho o \ To}$$

où S est la section d'un trou calibré, K est un coefficient qui dépend de la forme du trou, Tc est la température en amont du limiteur, et Po, To et $\rho o$ sont les conditions normales de pression, température et masse volumique du gaz considéré.

De préférence, les trous calibrés de la première plaque perforée du redresseur présentent un diamètre qui est compris entre 1/30ème et 1/6ème du diamètre nominal de la conduite.

Des modes de réalisation préférentiels des plaques perforées sont donnés ci-dessous:

La première plaque perforée comprend entre 25 et 335 trous répartis sur quatre à dix couronnes concentriques. Le diamètre des trous peut être différent d'une couronne à l'autre. Toutefois, selon une réalisation simplifiée, les trous de la première plaque perforée sont de diamètres tous identiques.

La deuxième plaque perforée du flasque amont comprend entre 8 et 100 trous calibrés répartis de façon homogène sur trois à six couronnes concentriques. Les trous calibrés de cette deuxième plaque perforée présentent avantageusement tous le même diamètre.

La troisième plaque perforée du flasque aval comprend entre 20 et 40 trous répartis de façon homogène sur deux à quatre couronnes concentriques. Toutefois, on notera que le rôle essentiel de la troisième plaque perforée est de soutenir la deuxième plaque poreuse sans perturber l'écoulement tout en étant capable, en cas accidentel de colmatage de cette plaque, de reprendre les efforts dus à la différence de pression entre l'amont et l'aval. La caractéristique principale de la troisième plaque perforée reste donc que la surface de passage totale du gaz soit grande par rapport à celle du flasque amont.

Les deuxième et troisième plaques perforées comprennent au moins un trou central.

Selon une caractéristique particulière, quelques trous calibrés de la deuxième plaque perforée sont occultés de façon sélective par des vis pour adapter le coefficient de débit global Q au calibre du compteur en fonction de la densité du gaz.

D'autres caractéristiques et avantages de l'invention ressortiront de la description suivante de modes particuliers de réalisation donnés à titre d'exemples, en référence aux dessins annexés, sur lesquels :

- la figure 1 est une vue d'ensemble, en coupe axiale, d'un dispositif compact de comptage de gaz selon l'invention,
- la figure 2 est un schéma de principe d'un poste de distribution de gaz classique à comptage en aval du détendeur-régulateur,
- la figure 3 est un schéma de principe d'un poste de distribution de gaz classique à comptage en amont du détendeur-régulateur,
- la figure 4 est un schéma de principe d'un poste de détente de gaz intégré multifonctions connu appliquant le principe du comptage à pression variable,
- la figure 5 est un graphe donnant l'évolution du débit volumique brut Qv en fonction du débit normal Qn pour un comptage à pression variable,
- la figure 6 est un graphe donnant l'évolution de la pression de comptage Pv en fonction du débit normal Qn,
- la figure 7 est une vue en coupe axiale d'un premier mode de réalisation d'un redresseur incorporé dans un dispositif selon l'invention,
- la figure 8 est une vue en coupe axiale d'un deuxième mode de réalisation d'un redresseur incorporé dans un dispositif selon l'invention,
- la figure 9 est une vue en coupe axiale, selon la ligne IX-IX de la figure 10, d'un exemple de plaque perforée d'un redresseur incorporé dans un dispositif selon l'invention,
- la figure 10 est une vue de face de la plaque perforée de la figure 9,
- la figure 11 est une vue en coupe axiale, selon la ligne XI-XI de la figure 12, d'un premier exemple de flasque amont d'un limiteur incorporé dans un dispositif selon l'invention,
- la figure 12 est une vue de face du flasque amont de la figure 11,
- la figure 13 est une vue en coupe axiale, selon la ligne XIII-XIII de la figure 14, d'un premier exemple de flasque aval d'un limiteur incorporé dans un dispositif selon l'invention,
- la figure 14 est une vue de face du flasque aval de la figure 13,
- la figure 15 est une vue de face d'un deuxième exemple de flasque amont d'un limiteur incorporé dans un dispositif selon l'invention,
- la figure 16 est une vue en coupe axiale selon la ligne XVI-XVI de la figure 15,
- la figure 17 est une vue de face d'un deuxième exemple de flasque aval d'un limiteur incorporé dans un dispositif selon l'invention,

- la figure 18 est une vue en coupe axiale selon la ligne XVIII-XVIII de la figure 17, et
- la figure 19 est une vue en coupe axiale d'un troisième mode particulier de réalisation d'un redresseur incorporé dans un dispositif selon l'invention.

Le dispositif de comptage de gaz à pression variable selon l'invention repose sur le principe de fonctionnement illustré en référence à la figure 4, mais inclut un ensemble de sous-ensembles modulaires qui ne sont pas incorporés dans un même boîtier contrairement aux réalisations présentées dans le document EP-A-0 337 887. De plus , la configuration du module constituant le redresseur et celle du module constituant le limiteur de débit, qui seront explicitées plus loin, sont adaptées pour faciliter la réalisation et assurer une grande fiabilité de fonctionnement.

Dans le cas d'un dispositif de comptage à pression variable, la valeur du coefficient de débit global Q du limiteur est inférieure ou égale au débit maximum du compteur, de manière à ne jamais être, quelle que soit la configuration de fonctionnement, en dépassement de capacité. Ainsi, la vitesse du gaz dans le compteur ne dépasse pas la valeur nominale maximale correspondant au débit nominal du compteur. La pression Pv au niveau du compteur peut ainsi varier de la pression aval de livraison Pa à une pression proche de la pression amont Pe en fonction du débit du poste.

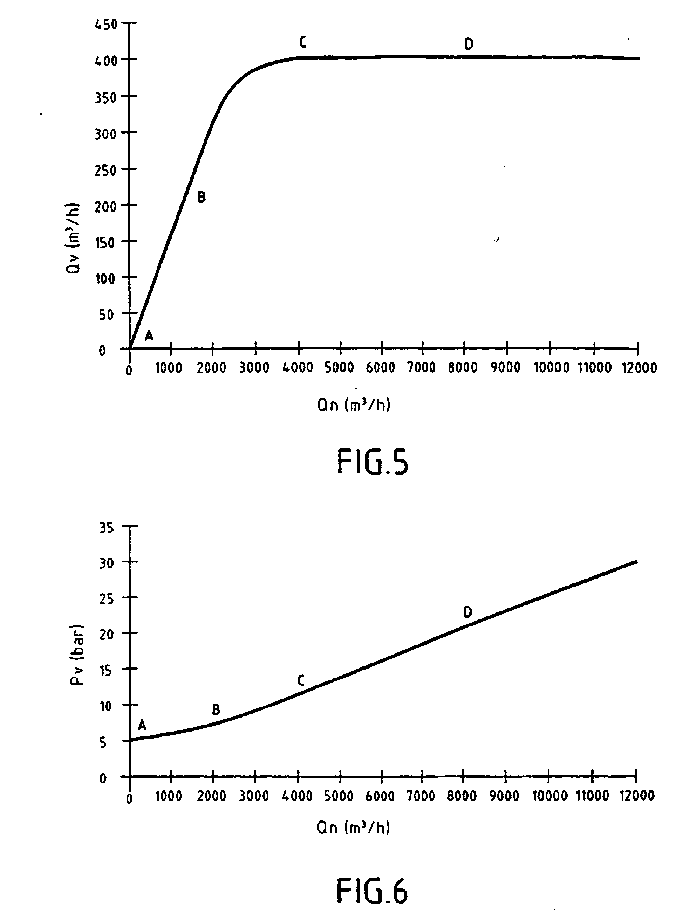

Les phénomènes mis en jeu dans un comptage à pression variable seront explicités ci-dessous pour les différentes plages de fonctionnement A, B, C, D, en référence aux graphes des figures 5 et 6 qui représentent respectivement le débit volumique brut Qv (en m$^3$/h) en fonction du débit normal Qn (en m$^3$/h) et la pression variable de comptage Pv (en bar) en fonction du débit normal Qn (en m$^3$/h), dans le cas d'un limiteur de débit de coefficient de débit Q = 400 m$^3$/h/bar (m$^3$.h-1.bar-1).

Pour la courbe Qv = f(Qn) de la figure 5, on observe un régime subsonique en deçà d'une valeur Qn égale à 4000 m$^3$/h et un régime sonique au-delà de cette valeur.

Pour la courbe Pv = f(Qn) de la figure 6, on observe une section non linéaire en deçà de la valeur Qn égale à 4000 m$^3$/h et une section linéaire au-delà de cette valeur.

La courbe de Pv en fonction de Qn se calcule de la façon suivante :

Pv = Pa + ((Qn/2Q)^2)Pa pour Pa<Pv<2Pa
Pv = Qn/Q        pour Pv>2Pa
avec Pa = 5 bar et Q = 400 m$^3$.h-1.bar-1,
à 12000 m$^3$/h on a bien Pv = 30 bar.

Dans la plage de fonctionnement A, à faible débit, la vitesse à travers le limiteur est faible et donc la perte de charge est faible. La pression de comptage est sensiblement égale à la pression aval du réseau et la détente est entièrement réalisée par le détendeur-régulateur.

Dans la plage de fonctionnement B, la vitesse du gaz à travers le limiteur augmente et la perte de charge augmente en conséquence. Tant que les vitesses sont faibles par rapport à la vitesse du son, on reste dans le domaine de l'incompressible et l'augmentation de la différence de pression aux bornes du limiteur est proportionnelle au gain d'énergie cinétique. Une partie de la détente est réalisée par le détendeur-régulateur et l'autre par le limiteur de débit.

Dans la plage de fonctionnement C, la vitesse du gaz dans le limiteur devient proche de la vitesse du son et des phénomènes plus complexes (compressibles) apparaissent jusqu'au point critique, où l'on atteint le débit volumique maximum du limiteur.

Dans la plage de fonctionnement D, on est en régime critique, c'est-à-dire que le débit normal varie proportionnellement à la pression en amont du limiteur. Ainsi, la pression de comptage Pv continue d'augmenter tant que le débit normal dans le réseau augmente et jusqu'à ce que la pression intermédiaire soit voisine de la pression amont. A ce point, le détendeur-régulateur se trouve en pleine ouverture et la détente est presque entièrement réalisée par le limiteur. Le détendeur-régulateur régule tant que le débit demandé ne dépasse pas sa propre capacité.

En dimensionnant correctement le compteur et le limiteur, on obtient pour le poste de comptage à pression variable une capacité (débit normal maximum admissible) égale à celle d'un poste sans comptage à pression variable, tout en améliorant la dynamique du compteur.

Si le compteur est constitué par un compteur de vitesse, par exemple à turbine, ou volumétrique, la dynamique DYNcpv du comptage à pression variable sera donnée en fonction de la dynamique DYNca d'un comptage aval, par la formule suivante :

$$\text{DYNcpv} = \text{Qn max/Qn min} = \text{Qmax/Qmin . Pe/Pa} = \text{DYNca.Pe/Pa}$$

où Qmax et Qmin sont les débits bruts maximum et minimum du compteur dans les conditions de référence pour lesquelles le constructeur a certifié l'exactitude du compteur.

La dynamique d'origine du compteur est ainsi multipliée par le rapport Pe/Pa entre la pression amont Pe du détendeur (pression du réseau) et la pression aval Pa du poste de détente (pression de livraison). Ceci permet d'atteindre des dynamiques de 100 à 150, tout en réduisant le calibre du compteur.

Le comptage à pression variable permet en outre d'augmenter la précision du comptage aux faibles débits sans augmentation de l'encombrement général du poste de détente. Les risques de gel du compteur en période de grosse consommation sont également diminués. Par ailleurs, la présence d'un limiteur de débit assure une protection du compteur vis-à-vis des survitesses.

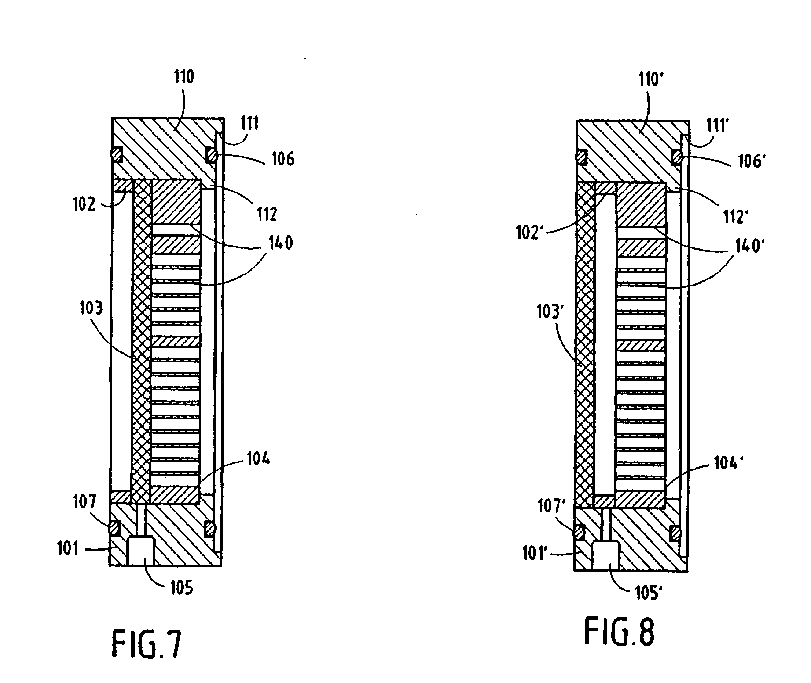

On décrira maintenant de façon plus détaillée et structurelle en référence aux figures 7 à 18 un dispositif de comptage à pression variable selon l'invention qui permet d'obtenir les avantages rappelés ci-dessus tout en présentant une grande simplicité de fabrication.

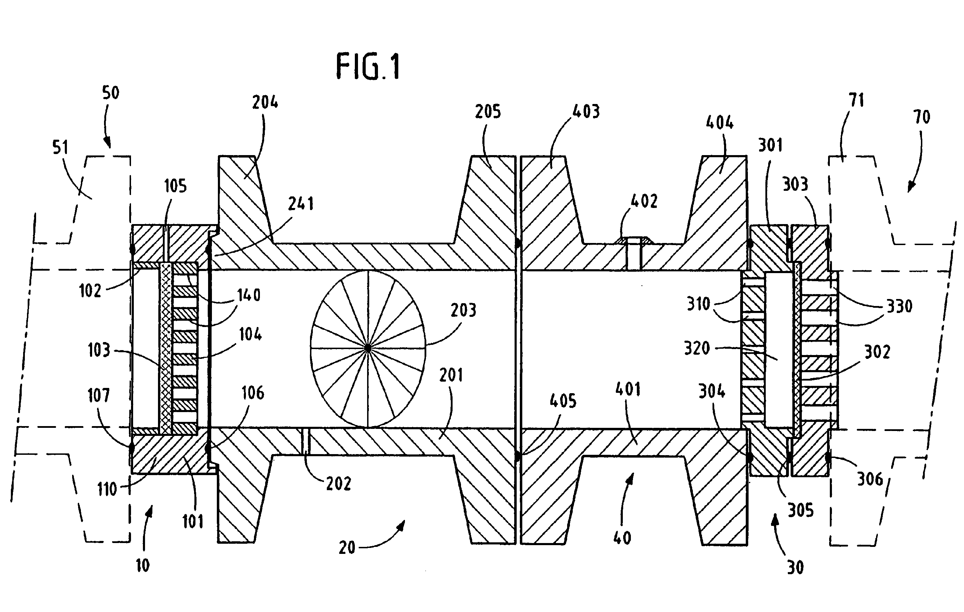

La figure 1 représente une vue d'ensemble d'un tel dispositif de comptage à pression variable qui comprend de façon modulaire, de l'amont vers l'aval, un conditionneur d'écoulement ou redresseur 10, un compteur de vitesse 20 et un limiteur de débit silencieux 30. Ces trois modules principaux sont associés en cascade. Ainsi, le redresseur 10 est placé contre la bride amont 204 du compteur 20 tandis que le limiteur 30 est placé contre la bride aval du compteur 20 (lorsque la manchette 40 est absente). Il en résulte une très grande compacité de l'ensemble du dispositif, dont la longueur peut facilement être inférieure à quatre fois le diamètre nominal D des conduites auxquelles est raccordé le dispositif.

Le redresseur 10 est interposé entre la bride 51 d'un tronçon de conduite amont 50 conduisant au détendeur-régulateur et la bride amont 204 du compteur 20. Le limiteur 30 peut être interposé de la même manière entre la bride 71 de la conduite aval 70 et la bride aval 205 du compteur 20.

Sur la figure 1, on a représenté le cas particulier d'un compteur 20 qui est équipé d'une prise de pression intégrée 202 mais ne comporte pas de prise de température intégrée. Dans ce cas, une manchette 40 équipée d'un piquage 402 pour une prise de température, est intercalée entre le compteur 20 et le limiteur 30. C'est alors la bride aval 404 de la manchette 40 qui est en contact avec le limiteur 30 et la bride amont 403 de la manchette 40 est raccordée à la bride aval 205 du compteur 20. La manchette 40 est donc un élément optionnel qui est omis lorsque le compteur 20 comporte une prise de température intégrée, le limiteur 30 venant alors directement en contact avec la bride aval 205 du compteur 20.

Le compteur 20 est du type compteur de vitesse et peut comprendre un élément actif 203 du type turbine.

Des joints d'étanchéité tels que des joints toriques 107, 106, 405, 304, 306 sont interposés entre les éléments successifs constitués par la conduite amont 50, le redresseur 10, le compteur 20, la manchette 40, le limiteur 30. Un joint d'étanchéité 305 est également interposé entre le flasque amont 301 et le flasque aval 303 qui constituent le limiteur 30.

Le corps cylindrique 201 du compteur 20 et le corps cylindrique 401 de la manchette 40 définissent un diamètre interne qui correspond au diamètre nominal des conduites amont 50 et aval 70.

On décrira maintenant de façon plus particulière en référence aux figures 1 et 7 à 10 la configuration d'un redresseur 10 adapté au dispositif de comptage selon l'invention et permettant de supprimer les turbulences ou autres effets de jet et de rotation de l'écoulement qui peuvent être introduits par le passage du gaz dans le détendeur-régulateur et dans certains éléments de conduite situés en amont du dispositif de comptage tels que des doubles coudes ou tés par exemple.

Ainsi le redresseur 10, ou conditionneur d'écoulement placé à l'entrée du dispositif de comptage selon l'invention, permet, grâce à sa configuration, d'obtenir un écoulement au niveau du compteur qui est à la fois symétrique par rapport à l'axe de la canalisation, sans rotation de la veine gazeuse et avec un niveau de turbulence faible.

Le redresseur 10 comprend essentiellement quatre éléments concentriques présentant une symétrie de révolution autour de l'axe du dispositif. Une couronne support 101 définit une ouverture circulaire concentrique à la pièce elle-même et comporte une partie amont dont l'ouverture cylindrique présente un diamètre légèrement supérieur au diamètre nominal de la conduite amont 50 et du compteur 20. La couronne support 101 présente en outre dans sa partie aval un épaulement 112 définissant une ouverture dont le diamètre correspond essentiellement au diamètre nominal de la conduite 50 et à celui du compteur 20. Un empilement de trois éléments 102, 103, 104 est disposé dans la partie amont du corps 110 de la couronne support 101 et vient en butée contre l'épaulement 112. Cet empilement se compose d'une entretoise en forme de bague 102, d'une plaque poreuse 103 et d'une plaque perforée 104.

Selon une disposition avantageuse, représentée sur les figures 1 et 7, la plaque poreuse 103 repose directement sur la plaque perforée 104, en amont de celle-ci, et la bague entretoise 102 est elle-même disposée en amont de la plaque poreuse 103 et maintient cette dernière plaquée contre la plaque perforée 104. Avec cette disposition la plaque poreuse 103 peut être uniformément supportée par la plaque perforée 104. Ceci est important en cas d'encrassement de la plaque poreuse 103. En effet dans ce cas, la perte de charge peut être importante de part et d'autre de la plaque poreuse 103 et les contraintes de pression sur cette plaque peuvent devenir supérieures à la résistance des matériaux. Le fait que la plaque perforée 104 puisse reprendre les efforts supplémentaires exercés sur la plaque poreuse 103 évite que la plaque poreuse 103 soit déformée ou se rompe.

Dans le cas où l'on utilise un gaz propre avec lequel la probabilité de colmatage du matériau poreux est faible, ou si l'on effectue des visites d'entretien régulières, on peut adopter pour le redresseur 10 la configuration représentée sur la figure 8. Sur la figure 8, les différents éléments correspondant à ceux du redresseur 10 de la figure 7 sont désignés par les mêmes numéros de référence, mais sont primés. Le mode de réalisation de la figure 8 diffère essentiellement de celui de la figure 7 par le fait que la bague entretoise 102' est interposée entre la plaque poreuse 103' et la plaque perforée 104'. Les éléments 103', 102', 104' forment ainsi un empilement dans cet ordre qui est plaqué contre l'épaulement 112' de la couronne support 101'. Selon cette configuration, un espace est ménagé entre le corps poreux 103' et la plaque perforée 104'. Ceci permet d'améliorer l'efficacité du redresseur en ce qui concerne l'atténuation de la dissymétrie.

Les épaisseurs de la plaque perforée 104, 104', de la plaque poreuse 103, 103' et de la bague entretoise 102, 102' peuvent être optimisées pour obtenir une meilleure efficacité contre les perturbations d'écoulement. Le choix du diamètre, du nombre et de la disposition des trous de la plaque permet également de réaliser cette optimisation. De préférence; la somme des épaisseurs de ces trois éléments constituant l'empilement placé contre l'épaulement 112, 112' est légèrement supérieure à la longueur dans le sens axial de l'ouverture circulaire de la couronne support 101, 101', prise entre l'épaulement 112, 112' et la face amont de la couronne support 101, 101', de telle sorte que le serrage de l'ensemble entre la bride 51 de la conduite amont 50 et la bride amont 204 du compteur 20 vienne écraser légèrement la plaque poreuse 103, 103' et bloque complètement l'empilement 102, 103, 104 ou 103', 102', 104'. On évite ainsi tout jeu susceptible de provoquer des vibrations et du bruit.

Des joints 106, 106'; 107, 107', tels que des joints toriques, sont placés dans des gorges annulaires usinées sur les faces aval et amont de la couronne support 101, 101' qui sont en contact respectivement avec la face supérieure de la bride 204 du compteur 20 et la face surélevée de la bride 51 de la conduite amont 50.

Comme représenté sur les figures 7 et 8, un épaulement supplémentaire 111, 111' peut être ménagé à la périphérie de la face aval de la couronne support 101, 101' de manière à faciliter le centrage par rapport à la bride 204 du compteur 20. Dans ce cas, le diamètre extérieur de la couronne support 101, 101' est légèrement supérieur à celui de la bride 204 et l'épaulement supplémentaire 111, 111' vient s'ajuster autour de la surface périphérique de la bride 204. Le contact axial entre la couronne support 101, 101' et la bride 204 s'effectue dans tous les cas au niveau des joints 106, 106'. Le diamètre extérieur de la couronne support 101, 101' peut aussi être inférieur à celui de la bride 204. Dans ce cas, la bride 204 présente une face surélevée 241 (figure 1).

Le diamètre intérieur de la bague entretoise 102, de même que celui de l'épaulement 112 sont tous deux égaux au diamètre intérieur de la conduite amont 50 et du compteur 20 pour éviter des variations brutales de diamètre intérieur qui pourraient perturber l'écoulement gazeux.

Un trou radial 105, 105' est percé dans le corps 110, 110' de la couronne support 101, 101' pour connecter le rejet du pilote du détendeur-régulateur. Ceci permet de prendre en compte dans le compteur 20 le débit du système de pilotage du détendeur placé en amont du redresseur 10. Dans le mode de réalisation de la figure 7, le trou 105 débouche dans la plaque poreuse 103. Ceci a pour effet de diffuser le jet provoqué par le débit du pilote et ainsi d'éliminer la dissymétrie qui pourrait être engendrée aux faibles débits.

La densité du corps poreux 103 peut être adaptée en fonction des besoins. Le grain du corps poreux 103 doit être suffisamment fin pour éliminer efficacement les perturbations d'écoulement, mais un grain plus gros peut être choisi lorsqu'il est essentiel d'éviter tout risque de colmatage. On peut utiliser avantageusement un matériau poreux constitué par une mousse de nickel chrome très aérée d'une densité d'environ 0,6 g/cm$^3$ dont le rapport volume occupé sur volume total est de l'ordre de 6%. Un exemple de tel matériau est commercialisé par la société SUMITOMO EUROPE LTD sous la dénomination de Celmet. La surface de contact avec l'écoulement est fonction des dimensions des mailles et varie de 500 m$^2$/m$^3$ pour des mailles grossières à 2500 m$^2$/m$^3$ pour des mailles fines. Plus les mailles sont fines, plus la perte de charge par viscosité augmente. Pour de l'air à la pression atmosphérique à la vitesse de 10 m s$^{-1}$, le coefficient de perte de charge (perte de charge/pression dynamique) varie de 2,7 à 15,7, ce qui assure une grande efficacité pour éliminer les dissymétries et atténuer les forts niveaux de turbulence. La présence du matériau poreux 103 protège le compteur 20 contre la projection de débris ou de blocs de glace ou d'hydrates qui pourraient endommager les pales de la turbine 203 du compteur lorsque l'on utilise un compteur à turbine.

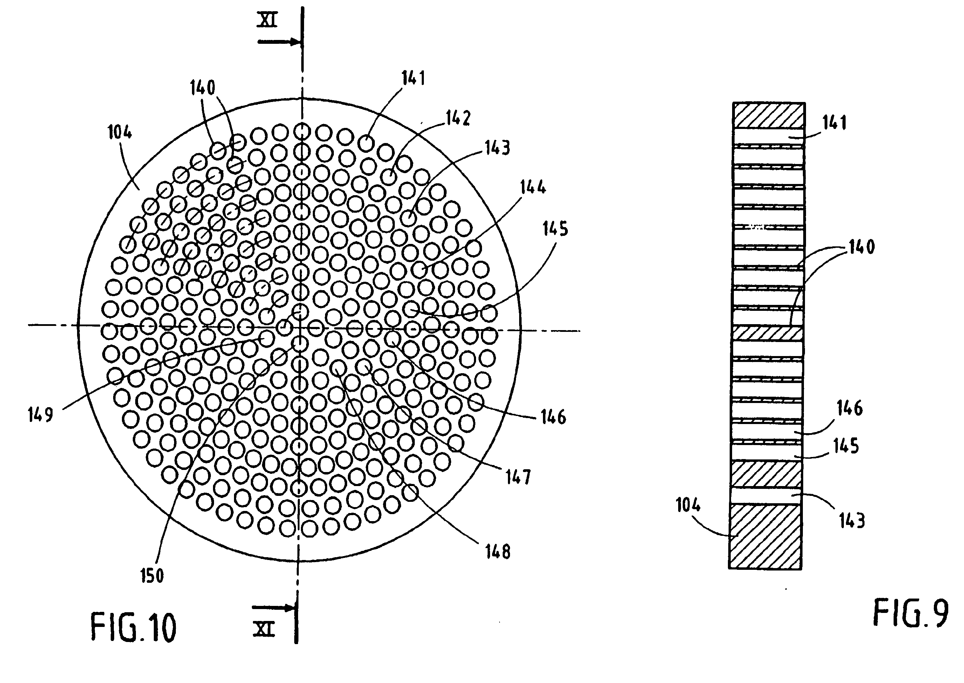

Un exemple de plaque perforée 104, adaptée à une conduite de diamètre nominal 150 mm est représenté sur les figures 9 et 10. Un ensemble de 335 trous 140 de diamètre 5,5 mm sont répartis de façon homogène dans toute la section de la plaque 104. Les trous 140 comprennent des trous répartis sur dix couronnes concentriques 141 à 150. A titre d'exemple, les trous 140 répartis en couronnes concentriques comprennent à partir de la périphérie de la plaque, une couronne 141 de 65 trous, une couronne 142 de 55 trous, une couronne 143 de 48 trous, une couronne 144 de 45 trous, une couronne 145 de 36 trous, une couronne 146 de 30 trous, une couronne 147 de 24 trous, une couronne 148 de 18 trous, une couronne 149 de 10 trous et une couronne 150 de 4 trous. Dans une même couronne, les trous sont régulièrement répartis, les intervalles entre les lignes moyennes de couronnes adjacentes peuvent être par exemple de 7,5 mm.

Le diamètre des trous 140 peut être compris entre 1/30$^{\text{ème}}$ et 1/6$^{\text{ème}}$ du diamètre nominal de la conduite. Le nombre total de trous 140 et le nombre de couronnes concentriques peuvent naturellement varier en fonction du diamètre nominal de la conduite.

La surface totale de passage du gaz doit être suffisante pour minimiser la perte de charge du redresseur et ne pas limiter le gain de dynamique apporté par le compteur à pression variable.

Les trous 140 de la plaque perforée 104 ne sont pas forcément tous du même diamètre. Toutefois, la réalisation peut être simplifiée si l'on réalise une plaque perforée d'une multiplicité de petits trous de diamètres tous identiques, comme représenté sur la figure 10.

Un redresseur selon l'invention, qui présente un encombrement réduit, d'une largeur de l'ordre du tiers du diamètre nominal de la conduite de transport de gaz, permet d'éliminer les longueurs droites habituellement recommandées et de placer le compteur 20 directement en aval du détendeur ou d'un autre obstacle présent dans un poste de détente, tel qu'un coude, un double coude, un té, un divergent, un convergent. A titre de comparaison, lorsqu'il est mis en oeuvre un redresseur classique, la norme américaine AGA 7 sur les compteurs à turbines recommande en configuration standard l'usage d'un redresseur classique en laissant une longueur droite égale au minimum à cinq fois le diamètre nominal de la conduite, entre la face aval du redresseur et le compteur, la longueur droite entre le compteur et le dernier obstacle devant être de 10 fois le diamètre nominal de la conduite, en l'absence de redresseur.

En comparaison, le redresseur 10 selon l'invention dont la longueur est largement inférieure au diamètre nominal de la conduite, permet de réduire au minimum la distance entre le compteur 20 et le dernier obstacle sur la conduite amont 50.

De plus, dans la mesure où le redresseur 10 est intégralement disposé entre les brides de montage et n'est pas inséré à l'intérieur d'une portion droite de canalisation, le montage et le démontage sont facilités, la fixation pouvant être réalisée par simple boulonnage, et il n'est pas nécessaire de retirer une portion de conduite. Par ailleurs, la disposition des éléments 102, 103, 104 sous la forme d'un empilement disposé dans la couronne support 101 permet, sans modifier la configuration du poste de détente, de facilement modifier la configuration du redresseur 10 et d'échanger la plaque poreuse 103, la plaque perforée 104 ou la bague entretoise 102, pour remplacer un élément défaillant ou adapter les caractéristiques du redresseur, voire supprimer la fonction redresseur en ne conservant que la couronne support 101. La conception modulaire du redresseur 10 constitue ainsi une caractéristique essentielle de l'invention.

On décrira maintenant en référence aux figures 1 et 11 à 18 des exemples de limiteur 30 conformes à l'invention.

Le rôle du limiteur 30 est de limiter la section de passage du gaz pour que le débit volumique brut qui passe dans le compteur 20 ne dépasse pas la capacité maximale du compteur, c'est-à-dire son débit nominal. En effet, une survitesse trop élevée ou prolongée du gaz dans le compteur 20 peut aboutir à la dégradation du compteur par rupture des pales ou endommagement des paliers de la turbine.

Le limiteur de débit 30 comprend essentiellement un flasque amont 301, qui définit une plaque perforée d'un nombre de trous calibrés 310, une plaque poreuse 302, dont la constitution et les caractéristiques peuvent être semblables à celles de la plaque poreuse 103 du redresseur 10, et un flasque aval 303 définissant une plaque perforée de trous 330 dont la section individuelle est très supérieure à celle des trous calibrés 310 et dont la section totale de passage est également très supérieure à la section totale de passage des trous 310 du flasque amont 301, et très proche de la surface totale de la section de passage de la conduite aval 70.

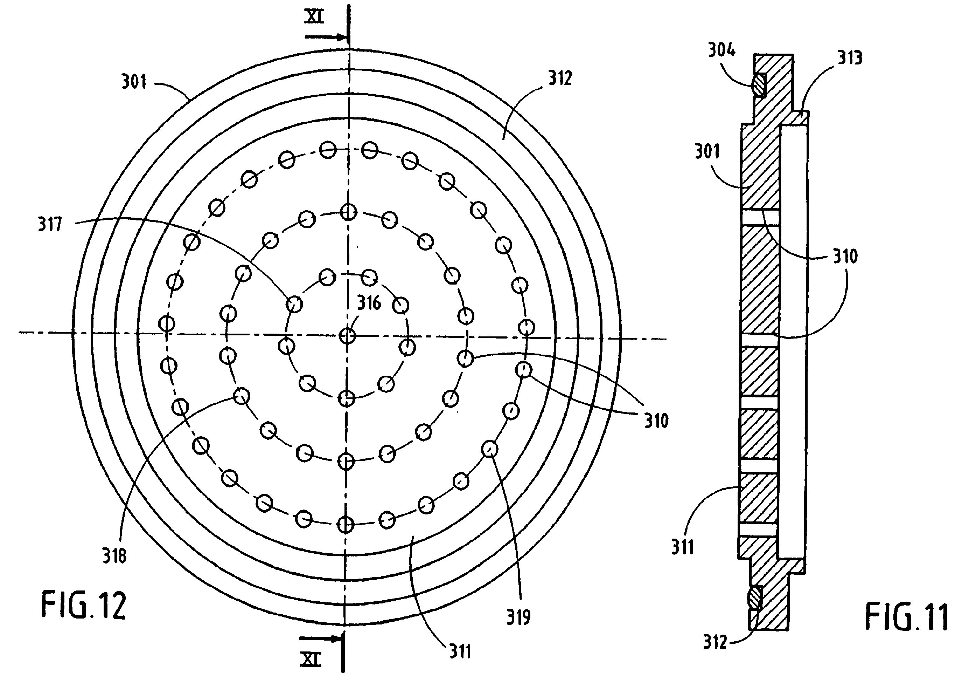

Le flasque aval 303 définit à sa partie amont un logement 331 dont le diamètre intérieur correspond au diamètre extérieur de la plaque poreuse 302, de telle sorte que la plaque poreuse 302 peut être disposée dans le logement 331 immédiatement contre la partie du flasque aval qui constitue la plaque perforée de trous 330 et assure essentiellement un rôle de support mécanique de la plaque poreuse 302. Le flasque amont 301 présente lui-même sur sa face aval (figure 11) une bague entretoise 313 qui s'emboîte dans le logement 331 du flasque aval 303 et appuie sur la plaque poreuse 302 pour presser celle-ci contre la plaque perforée constituant le fond du flasque aval 303, ce qui évite tout jeu qui pourrait être à l'origine de vibration. Un espace libre 320 est dans tous les cas ménagé dans le flasque amont 301 entre la plaque perforée de trous calibrés 310 et la plaque poreuse 302 (figure 1). Cet espace libre 320 présente de préférence, dans le sens axial, une épaisseur de l'ordre du double du diamètre d des trous calibrés 310. L'espace libre 320 permet à la plaque poreuse 302 de jouer le rôle de silencieux et d'absorber au mieux le bruit émis par les ondes de choc de recompression du gaz et par la turbulence suite à la détente sonique du gaz par les trous calibrés 310.

L'ensemble du limiteur 30 est ainsi modulaire, en permettant un échange du flasque amont 301, de la pièce poreuse 302 et du flasque aval 303, tout en étant compact, la longueur du limiteur 30 dans le sens axial pouvant être de l'ordre du tiers du diamètre nominal des conduites amont 50 et aval 70. Le montage et le démontage sont également aisés entre la bride aval 205 du compteur 20 (ou comme représenté sur la figure 1, la bride aval 404 de la manchette 40) et la bride amont 71 de la conduite aval 70. L'étanchéité entre les divers éléments juxtaposés est assurée par des joints toriques 304, 305, 306 disposés respectivement dans des gorges annulaires 312, 332, 334 ménagées dans les flasques amont 301 et aval 303.

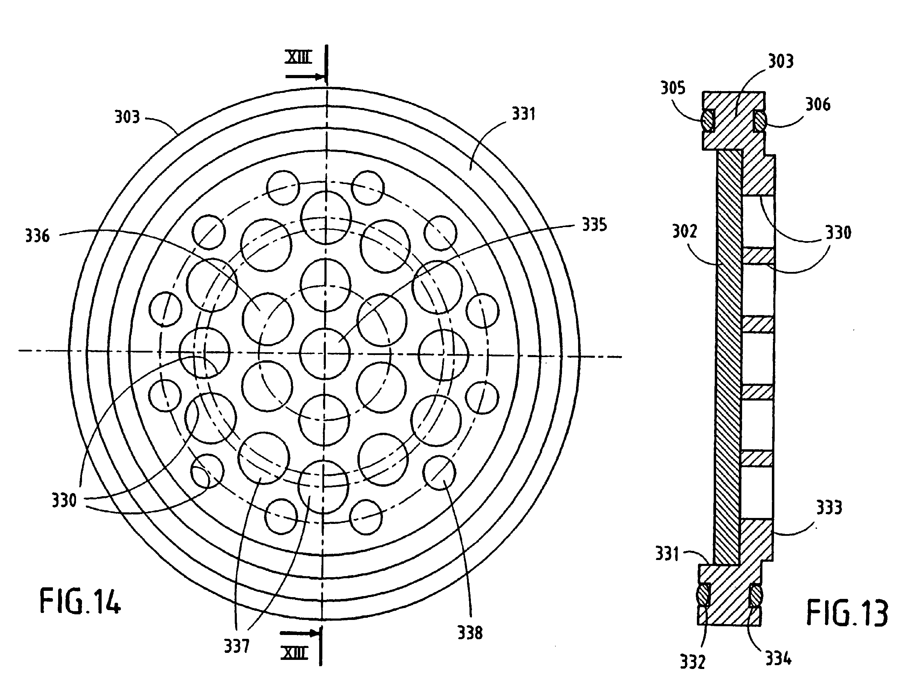

Comme on peut le voir sur les figures 11 à 12, les flasques amont 301 et aval 303 présentent des formes faciles à usiner. Les figures 11 et 13 en particulier montrent que les parties 311 et 333 des flasques amont 301 et aval 303 percées de trous 310 et 330 respectivement, peuvent être légèrement en saillie vers l'extérieur pour permettre un centrage respectivement dans la bride 205 du compteur 20 (ou la bride 404 de la manchette 40) et dans la bride 71 de la conduite aval 70. Le diamètre extérieur des plaques perforées en saillie 311, 333 des flasques amont 301 et aval 303 correspond ainsi au diamètre intérieur de la bride du compteur 20 ou de sa manchette 40 et de la conduite aval 70.

La face amont du flasque amont 301 est percée d'un nombre n de trous calibrés 310, à travers lesquels doit passer le gaz. C'est cette partie qui fait office de limiteur à proprement parler. Les trous 310 ont tous le même diamètre d et le même coefficient de débit q. C'est leur nombre n qui définit la section totale de passage et le coefficient de débit global Q du limiteur. Le nombre n de trous est calculé de telle sorte que le coefficient de débit Q du limiteur, c'est-à-dire le nombre de $m^3$ par heure et par bar de pression amont en régime critique, soit inférieur ou égal au débit brut maximal Qmax du compteur.

Le coefficient de débit q d'un trou 310 est égal a :

$$q = KS\sqrt{Tc}\ \overline{Po/2\rho o\ To}$$

où S est la section d'un trou, K un coefficient qui dépend de la forme du trou, Tc la température en amont du limiteur et où Po, To et $\rho o$ sont les conditions normales de pression, température et masse volumique (par exemple 1013,25 mbar; 273,15 °K et masse volumique du gaz considéré). A titre d'exemple, on peut réaliser des trous cylindriques 310 d'un diamètre d'environ 5 mm. Leur facteur géométrique est alors environ de K =0,8. Dans ce cas précis le coefficient de débit d'un trou est, pour un gaz de masse volumique 0,73 kg/$m^3$ à 15°C, d'environ 15 $m^3$/h.

Le nombre n de trous est déterminé par l'égalité suivante :

$$Q = nq$$

où Q est le coefficient de débit global du limiteur, qui est choisi par l'exploitant et doit être de toute façon inférieur ou égal au débit nominal du compteur. La précision d'ajustage du limiteur est égale au coefficient de débit des trous. Dans le cas par exemple où l'on souhaite dimensionner le limiteur au plus près du débit nominal d'un compteur G400 (650 $m^3$/h), on choisira n = 43, ce qui donne un coefficient de débit de 645 $m^3$/h. Il faut tenir compte dans le dimensionnement du limiteur que la qualité du gaz peut varier et sa masse volumique également; Une diminution de la masse volumique de 10% entraîne une augmentation du coefficient de débit des trous, et par conséquent du coefficient de débit global de 5%. Dans le cas considéré le coefficient de débit global s'établirait donc à 676 $m^3$/h, ce qui est légèrement supérieur au débit maximal toléré, mais reste acceptable.

La dimension des trous 310 est un paramètre important. Ils ne doivent pas être trop grands pour plusieurs raisons. Premièrement la fréquence du bruit engendré par un jet de gaz passant à travers un orifice de faible dimension est plus élevée que dans le cas d'un orifice de grande dimension et les fréquences élevées sont plus facilement atténuées. Deuxièmement des trous de faible dimension ont un coefficient de débit plus faible ce qui permet d'ajuster plus finement le coefficient de débit global du limiteur. Pour un usage courant sur un réseau de transport; des trous de diamètre 4 à 6 mm, et de préférence 5 mm, sont un bon compromis. De plus, la faible dimension des trous permet d'en occulter un ou plusieurs à volonté par une vis pour adapter finement le coefficient de débit au calibre du compteur en fonction de la densité du gaz.

La disposition des trous, une fois leur nombre déterminé, se fait de manière homogène sur la section du flasque amont. Les trous calibrés 310 sont répartis sur 3 à 6 couronnes concentriques, suivant le diamètre de la conduite, autour d'un trou central.

Le nombre total de trous calibrés peut ainsi être généralement compris entre 8 et 100.

Suivant le calibre du compteur qui est utilisé, le coefficient de débit pourra varier, dans la plupart des cas, de 160 $m^3$/h à 1600 $m^3$/h. Le coefficient de débit q d'un trou d'à peu près 5 mm de diamètre varie de 14 à 18 $m^3$/h, le nombre de trous peut varier de 8 à 100. Suivant le calibre des compteurs, le diamètre de la canalisation utilisée n'est pas le même. Il peut varier de 80 mm pour Qmax = 160 $m^3$/h à 200 mm pour Qmax = 1600 $m^3$/h. La répartition des trous se fait alors suivant le diamètre de la canalisation sur 3 à 6 couronnes, pour obtenir un écoulement aval aussi homogène que possible.

On a représenté sur la figure 12 un exemple de répartition de trous calibrés 310 de diamètre 5,3 mm pour un compteur de type G650 au diamètre nominal de 150 mm.

On voit autour d'un trou central 316, des ensembles de 55 trous calibrés régulièrement répartis sur trois couronnes concentriques 317, 318, 319 dont les lignes moyennes sont écartées les unes des autres d'environ 2,5 mm. La première couronne intérieure 317 comporte 9 trous, la couronne intermédiaire 318 comporte 18 trous et la couronne extérieure 319 comporte 27 trous.

Les figures 13 et 14 montrent un exemple de flasque aval 303 adapté au flasque amont 301 correspondant à l'exemple qui vient d'être donné. Dans ce cas, la plaque perforée 333 du flasque aval 303 comporte un trou central 335

de diamètre 20 mm, une première couronne 336 de six trous de diamètre 20 mm, une deuxième couronne 337 de 12 trous de diamètre 20 mm et une troisième couronne 338 de douze trous de diamètre 12 mm. Les trous 330 sont répartis selon une distribution homogène et présentent un diamètre nettement plus important que celui des trous calibrés 310 ou des trous 110 du redresseur 10. Il n'est cependant pas nécessaire que les trous 330 se situent rigoureusement sur des cercles concentriques. Ainsi, la figure 14 montre que les douze trous de la couronne 337 définissent en réalité un hexagone.

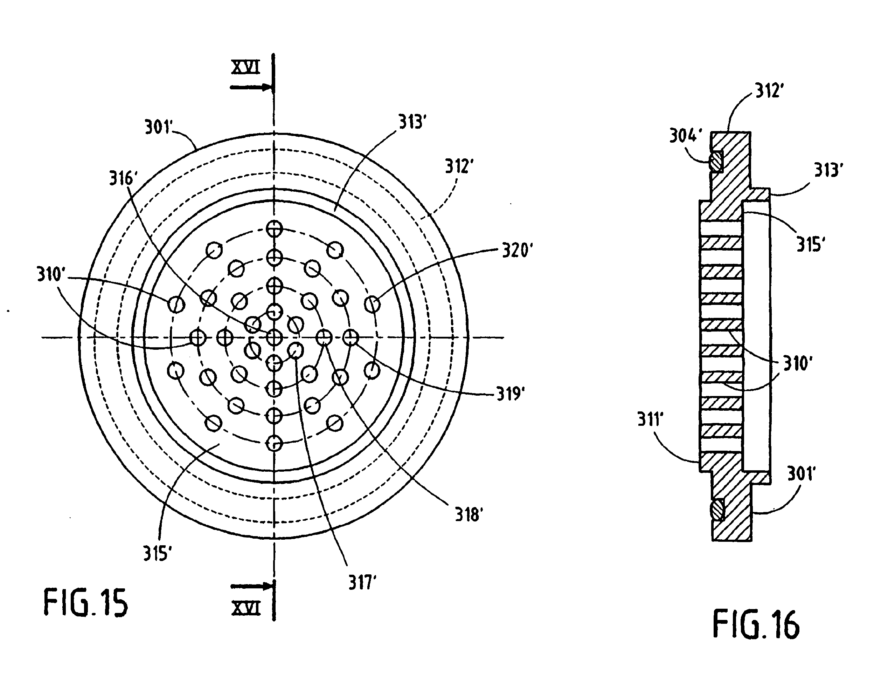

Les figures 15 à 18 montrent un autre exemple particulier d'éléments constitutifs d'un limiteur 30 selon l'invention, dans le cas d'un dispositif de comptage incluant un compteur de type G400 de diamètre nominal 100 mm. Les figures 15 à 18 utilisent les mêmes numéros de référence que les figures 11 à 14 pour les éléments assurant la même fonction, mais avec le signe prime. Ces divers éléments ne seront donc pas décrits à nouveau en détail.

On remarque sur la figure 15 que la plaque perforée 311' du flasque amont 301' comprend 37 trous calibrés 310' de diamètre 5,2 mm, avec, autour d'un trou central 316', une première couronne 317' de 6 trous, une deuxième couronne 318' de 8 trous, une troisième couronne 319' de douze trous et une quatrième couronne 320' de dix trous. Les trous 310' sont régulièrement répartis au sein de chaque couronne. L'écartement entre les couronnes est de l'ordre de 10 mm.

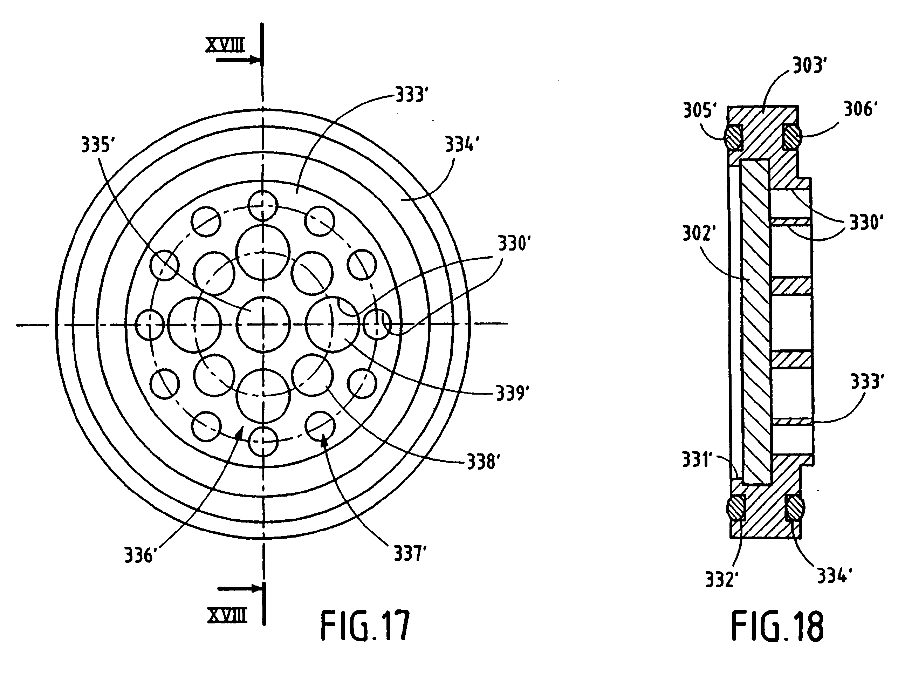

La plaque perforée 333' du flasque aval 303' des figures 17 et 18 comprend un trou central 335' de diamètre 20 mm, une première couronne 336' de huit trous et une deuxième couronne 337' de douze trous de diamètre 10 mm. On voit que pour le flasque aval 303' le diamètre des trous 330' peut être différent au sein de la plaque et au sein d'une même couronne de manière à accroître au maximum la section de passage. Ainsi, la couronne 336' comprend de façon alternée quatre trous 338' de diamètre 15 mm et quatre trous 337' de diamètre 20 mm.

Les configurations données sur les figures 11 à 18 ne sont pas limitatives. En ce qui concerne le flasque aval 303, il est en général convenable de réaliser entre 20 et 40 trous répartis de façon homogène avec un trou central et deux à quatre couronnes concentriques.

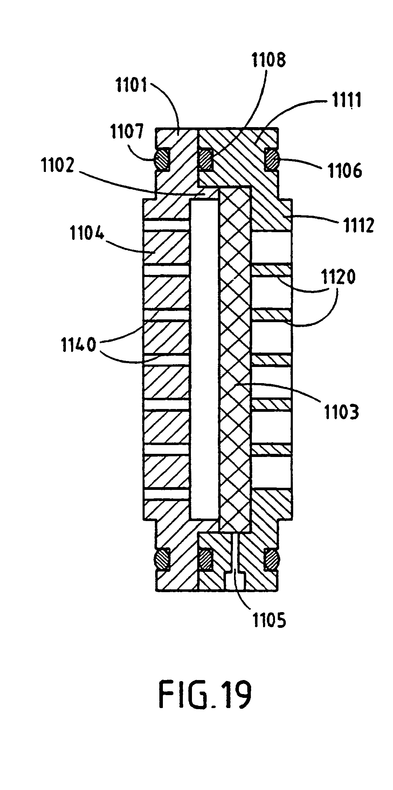

On a représenté sur la figure 19 un troisième mode de réalisation d'un redresseur 10 qui possède une structure un peu plus complexe que celles des figures 7 et 8, mais présente l'avantage d'être réalisé d'une manière plus semblable à celle du limiteur 30 et par là-même peut permettre une certaine rationalisation des fabrications.

Dans le mode de réalisation de la figure 19, la plaque 1104 perforée de trous 1140 peut être réalisée avec des dimensions et une répartition des trous 1140 qui sont tout à fait analogues à celles décrites plus haut en référence aux trous 140, 140' des plaques perforées 104, 104'. La plaque perforée 1104 est toutefois incorporée dans un flasque amont qui est lui-même analogue au flasque amont 301, 301' du limiteur 30.

La plaque perforée 1104 est ainsi constituée par la partie centrale d'un flasque amont dont la partie périphérique définit, d'une part, une entretoise 1102 jouant le rôle de l'entretoise 102 de la figure 7 et, d'autre part, une partie amont 1101 d'une couronne support. Dans le mode de réalisation de la figure 19, la plaque perforée 1104 se trouve en amont d'une plaque poreuse 1103 qui est identique à la plaque poreuse 103 de la figure 7. Cette plaque poreuse 1103 est maintenue plaquée sans jeu, par l'entretoise 1102, contre une plaque support 1112 perforée de trous 1120 dont la section individuelle est supérieure à celle des trous 1140 de la plaque perforée 1104 et dont la section totale de passage est très supérieure à la section totale de passage de la plaque perforée 1104. La plaque perforée 112 est constituée par la partie centrale d'un flasque aval dont la partie périphérique définit une partie aval 1111 de la couronne support du redresseur selon les modes de réalisation des figures 7 et 8. Le flasque aval peut ainsi présenter une configuration analogue à celle du flasque aval 303, 303' du limiteur 30. Des joints toriques 1106, 1107, 1108 assurent l'étanchéité au niveau des parties périphériques des flasques aval et amont d'une façon similaire aux joints 306, 304, 305 des figures 11 et 13.

## Revendications

**1.** Dispositif compact de comptage de gaz à pression variable, pour le comptage du volume de gaz circulant dans une conduite, en aval d'un détendeur régulateur, comprenant successivement un redresseur d'écoulement (10), un compteur de vitesse (20) et un limiteur de débit silencieux (30),

**caractérisé en ce que** le redresseur (10) est adapté à être disposé entre une bride (51) d'une conduite amont (50) de raccordement au détendeur - régulateur et une bride amont (204) du compteur (20), **en ce que** le limiteur (30) est adapté à être disposé entre une bride aval du compteur (20) ou d'une manchette (40) associée au compteur (20) et une bride (71) d'une conduite aval (70), **en ce que** le redresseur (10) comprend une couronne support (101) dans laquelle sont montées une première plaque (104) perforée de trous (140), ainsi qu'une première plaque poreuse (103) et une entretoise (102) en forme de bague coopérant avec la première plaque perforée (104) et **en ce que** le limiteur (30) comprend un flasque amont (301) définissant une deuxième plaque perforée d'un nombre défini de trous calibrés (310), dont la section de passage totale est très inférieure à celle de la première plaque perforée (104), une deuxième plaque poreuse (302) et un flasque aval (303) définissant une troisième plaque perforée de trous (330) dont la section totale de passage est très supérieure à la section totale de passage de la deuxième plaque perforée du flasque amont (301).

**2.** Dispositif selon la revendication 1, **caractérisé en ce que** les trous de la première plaque perforée (104) sont répartis de façon homogène sur toute la surface de cette première plaque (104).

**3.** Dispositif selon la revendication 1 ou la revendication 2, **caractérisé en ce que** la couronne support (101) présente au voisinage de sa face aval, un épaulement (112) formant saillie radialement vers l'intérieur de la couronne support (101) et **en ce que** la première plaque perforée (104) est placée directement en contact avec ledit épaulement (112).

**4.** Dispositif selon la revendication 3, **caractérisé en ce que** la première plaque perforée (104), la première plaque poreuse (103) et l'entretoise (102) constituent un empilement venant en butée contre l'épaulement (112) de la couronne support (101) et **en ce que** la somme des épaisseurs, dans le sens axial, de la première plaque perforée (104), de la première plaque poreuse (103) et de l'entretoise (102) est légèrement supérieure à la distance, dans le sens axial, entre l'épaulement aval (112) de la couronne support (101) et la face amont de ladite couronne support (101) de telle manière que le serrage de l'empilement (104, 103, 102) entre la bride (51) de la conduite amont (50) de raccordement et la bride amont (204) du compteur écrase légèrement la première plaque poreuse (103).

**5.** Dispositif selon la revendication 3 ou 4, **caractérisé en ce que** la première plaque poreuse (103) est disposée directement contre la première plaque perforée (104) et l'entretoise (102) en forme de bague est disposée en amont de la première plaque poreuse (103).

**6.** Dispositif selon la revendication 3 ou 4, **caractérisé en ce que** l'entretoise (102') est disposée directement contre la première plaque perforée (104') et la première plaque poreuse (103') est disposée en amont de l'entretoise (102').

**7.** Dispositif selon l'une quelconque des revendications 1 à 6, **caractérisé en ce que** le flasque amont (301) du limiteur (30) définit sur sa face aval une bague entretoise (313, 313') qui coopère avec le flasque aval (303) du limiteur (30) pour maintenir sans jeu la deuxième plaque poreuse (302) plaquée contre la troisième plaque perforée du flasque aval (303).

**8.** Dispositif selon l'une quelconque des revendications 1 à 7, **caractérisé en ce qu'**un espace libre (320) est ménagé entre la deuxième plaque perforée et la deuxième plaque poreuse (302) et présente dans le sens axial une épaisseur de l'ordre du double du diamètre d des trous calibrés (310) de la deuxième plaque perforée du flasque amont (301).

**9.** Dispositif selon l'une quelconque des revendications 1 à 8, **caractérisé en ce que** la section individuelle des trous (330) de la troisième plaque perforée du flasque aval (303) est supérieure à celle des trous calibrés (310) de la deuxième plaque perforée du flasque amont (301).

**10.** Dispositif selon l'une quelconque des revendications 1 à 9, **caractérisé en ce que** le redresseur (10) présente dans le sens axial une épaisseur de l'ordre du tiers du diamètre nominal D de la conduite.

**11.** Dispositif selon l'une quelconque des revendications 1 à 10, **caractérisé en ce que** le limiteur (30) présente dans le sens axial une épaisseur de l'ordre du tiers du diamètre nominal D de la conduite.

**12.** Dispositif selon l'une quelconque des revendications 1 à 11, **caractérisé en ce qu'**il comprend une manchette (40) de prise de température munie d'une bride amont (403) et d'une bride aval (404), qui est interposée entre la bride aval (205) du compteur (20) et le flasque amont (301) du limiteur (30).

**13.** Dispositif selon l'une quelconque des revendications 1 à 12, **caractérisé en ce que** les première et deuxième plaques poreuses (103, 302) présentent une épaisseur comprise entre 5 et 20 mm, et de préférence voisine de 10 mm.

**14.** Dispositif selon l'une quelconque des revendications 1 à 13, **caractérisé en ce que** les première et deuxième plaques poreuses (103, 302) sont constituées par une mousse de nickel-chrome très aérée dont la densité est de l'ordre de 0,6 g/cm$^3$ et dont le rapport entre le volume occupé et le volume total est de l'ordre de 6%.

**15.** Dispositif selon l'une quelconque des revendications 1 à 14, **caractérisé en ce que** le nombre n de trous calibrés (310) de la deuxième plaque perforée est déterminé par une valeur approchée du rapport Q/q entre le coefficient de débit global Q du limiteur (30), qui est inférieur ou égal au débit nominal du compteur (20), et le coefficient de

EP 0 880 015 B1

débit q d'un trou calibré (310), qui est déterminé par la formule

$$q = KS \sqrt{Tc\ Po/2\rho o\ To}$$

où S est la section d'un trou calibré (310), K est un coefficient qui dépend de la forme du trou, Tc est la température en amont du limiteur (30), et Po, To et ρo sont les conditions normales de pression, température et masse volumique du gaz considéré.

**16.** Dispositif selon l'une quelconque des revendications 1 à 15, **caractérisé en ce que** les trous (140) de la première plaque perforée (104) présentent un diamètre qui est compris entre 1/30$^{ème}$ et 1/6$^{ème}$ du diamètre nominal de la conduite.

**17.** Dispositif selon l'une quelconque des revendications 1 à 16, **caractérisé en ce que** la deuxième plaque perforée du flasque amont (301) comprend entre 8 et 100 trous calibrés répartis de façon homogène sur trois à six couronnes concentriques.

**18.** Dispositif selon l'une quelconque des revendications 1 à 17, **caractérisé en ce que** la troisième plaque perforée du flasque aval (303) comprend entre 20 et 40 trous répartis de façon homogène sur deux à quatre couronnes concentriques.

**19.** Dispositif selon la revendication 18, **caractérisé en ce que** les trous de la troisième plaque perforée du flasque aval (303) présentent différents diamètres.

**20.** Dispositif selon l'une quelconque des revendications 1 à 19, **caractérisé en ce que** la première plaque perforée (104) comprend entre 25 et 335 trous répartis sur quatre à dix couronnes concentriques.

**21.** Dispositif selon l'une quelconque des revendications 1 à 20, **caractérisé en ce que** chacune des deuxième et troisième plaques perforées comprend au moins un trou central (316; 316', 335, 335').

**22.** Dispositif selon l'une quelconque des revendications 1 à 21, **caractérisé en ce que** quelques trous calibrés de la deuxième plaque perforée sont occultés de façon sélective par des vis pour adapter le coefficient de débit global Q au calibre du compteur en fonction de la densité du gaz.

**23.** Dispositif selon la revendication 1 ou la revendication 2, **caractérisé en ce que** la première plaque (1104) perforée de trous (1140) est constituée par la partie centrale d'un flasque amont dont la partie périphérique définit, d'une part, l'entretoise (1102) et, d'autre part, une partie amont (1101) de la couronne support, **en ce que** la première plaque poreuse (1103) est maintenue plaquée par l'entretoise (1102) contre une quatrième plaque (1112) perforée de trous (1120) dont la section totale de passage est très supérieure à la section totale de passage de la première plaque perforée (1104), et **en ce que** la quatrième plaque perforée (1112) est constituée par la partie centrale d'un flasque aval dont la partie périphérique définit une partie aval (1111) de la couronne support.

**Claims**

**1.** A compact variable-pressure gas metering device for metering a volume of gas flowing along a pipe, downstream from an expander-regulator, and comprising in succession: a flow straightener (10), a velocity-measuring flowmeter (20), and a silent flowrate limiter (30);
the device being **characterised in that** the straightener (10) is adapted to be disposed between a flange (51) of an upstream pipe (50) for coupling to the expander-regulator, and an upstream flange (204) of the meter (20), **in that** the limiter (30) is adapted to be disposed between a downstream flange of the meter (20) or of an extender (40) associated with the meter (20), and a flange (71) of a downstream pipe (70), **in that** the straightener (10) comprises a support ring (101) in which there are mounted a first perforated plate (104) perforated by holes (140) together with a first porous plate (103) and a spacer (102) in the form of an annulus co-operating with the first perforated plate (104), and **in that** the limiter (30) comprises an upstream web (301) defining a second perforated plate perforated by a defined number of calibrated holes (310) of total flow section that is much less than the flow section of the first perforated plate (104), a second porous plate (302), and a downstream web (303) defining a third perforated plate perforated by holes (330) of total flow section that is much greater than the total flow section of the second perforated plate of the upstream web (301).

2. A device according to claim 1, **characterised in that** the holes of the first perforated plate (104) are distributed uniformly over the entire area of said first plate (104).

3. A device according to claim 1 or claim 2, **characterised in that** the support ring (101) has, in the vicinity of its downstream face, a shoulder (112) projecting radially inwards from the support ring (101), and **in that** the first perforated plate (104) is placed directly in contact with said shoulder (112).

4. A device according to claim 3, **characterised in that** the first perforated plate (104), the first porous plate (103), and the spacer (102) constitute a stack coming into abutment against the shoulder (112) of the support ring (101), and **in that** the sum of the thicknesses in the axial direction of the first perforated plate (104), of the first porous plate (103), and of the spacer (102) is slightly greater than the distance in the axial direction between the downstream shoulder (112) of the support ring (101) and the upstream face of said support ring (101) in such a manner that clamping the stack (104, 103, 102) between the flange (51) of the upstream connection pipe (50) and the upstream flange (204) of the meter compresses the first porous plate (103) to a small extent.

5. A device according to claim 3 or claim 4, **characterised in that** the first porous plate (103) is disposed directly against the first perforated plate (104) and the spacer (102) in the form of an annulus is disposed upstream from the first porous plate (103).

6. A device according to claim 3 or claim 4, **characterised in that** the spacer (102') is disposed directly against the first perforated plate (104') and the first porous plate (103') is disposed upstream from the spacer (102').

7. A device according to any one of claims 1 to 6, **characterised in that** the upstream web (301) of the limiter (30) defines on its downstream face a spacer annulus (313, 313') which co-operates with the downstream web (303) of the limiter (30) to hold the second porous plate (302) without clearance pressed against the third perforated plate of the downstream web (303).

8. A device according to any one of claims 1 to 7, **characterised in that** an empty space (320) is provided between the second perforated plate and the second porous plate (302) and has, in the axial direction, a thickness that is about twice the diameter <u>d</u> of the calibrated holes (310) in the second perforated plate of the upstream web (301).

9. A device according to any one of claims 1 to 8, **characterised in that** the holes (330) of the third perforated plate of the downstream web (303) are individually of section that is greater than the section of the calibrated holes (310) of the second perforated plate of the upstream web (301).

10. A device according to any one of claims 1 to 9, **characterised in that** the straightener (10) has thickness in the axial direction that is about one-third the nominal diameter D of the pipe.

11. A device according to any one of claims 1 to 10, **characterised in that** the limiter (30) has thickness in the axial direction of about one-third the nominal diameter D of the pipe.

12. A device according to any one of claims 1 to 11, **characterised in that** it includes an extender (40) with a temperature takeoff, the extender being provided with an upstream flange (403) and with a downstream flange (404), which extender is interposed between the downstream flange (205) of the meter (20) and the upstream flange (301) of the limiter (30).

13. A device according to any one of claims 1 to 12, **characterised in that** the first and second porous plates (103, 302) are of a thickness lying in the range 5 mm to 20 mm, and preferably in the vicinity of 10 mm.

14. A device according to any one of claims 1 to 13, **characterised in that** the first and second porous plates (103, 302) are constituted by a highly aerated nickel-chromium foam of density of about 0.6 g.cm$^3$, in which the ratio of solid volume over total volume is of the order of 6%.

15. A device according to anyone of claims 1 to 14, **characterised in that** the number n of calibrated holes (310) in the second perforated plate is determined to be close to the value of the ratio Q/q between the overall flow coefficient Q of the limiter (30) which is less than or equal to the nominal flow rate of the flowmeter (20) and the flow coefficient q of a calibrated hole (310), which is given by the formula:

$$q = KS\sqrt{T_cP_o / 2\rho_o T_o}$$

where S is the section of a calibrated hole (310), K is a coefficient which depends on the shape of the hole, Tc is the temperature upstream from the limiter (30), and $P_o$, $T_o$, and $\rho_o$ are normal conditions of pressure, temperature, and density for the gas under consideration.

16. A device according to any one of claims 1 to 15, **characterised in that** the holes (140) of the first perforated plate (104) have a diameter lying in the range 1.30th to 1.6th of the nominal diameter of the pipe.

17. A device according to any one of claims 1 to 16, **characterised in that** the second perforated plate of the upstream web (301) has 8 to 100 calibrated holes distributed in uniform manner over three to six concentric rings.

18. A device according to any one of claims 1 to 17, **characterised in that** the third perforated plate of the downstream web (303) has 20 to 40 holes distributed in uniform manner over two to four concentric rings.

19. A device according to claim 18, **characterised in that** the holes of the third perforated plate of the downstream web (303) present different diameters.

20. A device according to anyone of claims 1 to 19, **characterised in that** the first perforated plate (104) comprises 25 to 335 holes distributed over four to ten concentric rings.

21. A device according to any one of claims 1 to 20, **characterised in that** each of the second and third perforated plates has at least one central hole (316, 316', 335, 335').

22. A device according to any one of claims 1 to 21, **characterised in that** some of the calibrated holes of the second perforated plate are closed in selective manner by screws so as to match the overall flow coefficient Q to the rating of the meter as a function of the density of the gas.

23. A device according to claim 1 or claim 2, **characterised in that** the first perforated plate (1104) perforated with holes (1140) is constituted by the central portion of an upstream web whose peripheral portion defines firstly the spacer (1102) and secondly an upstream portion (1101) of the support ring, **in that** the first porous plate (1103) is held pressed by the spacer (1102) against a fourth perforated plate (1112) perforated by holes (1120) providing a total flow passage that is much greater than the total flow passage of the first perforated plate (1104), and **in that** the fourth perforated plate (1112) is constituted by the central portion of a downstream web whose peripheral portion defines a downstream portion (1111) of the support ring.

**Patentansprüche**

1. Kompakte Zählvorrichtung für Gas mit variablem Druck zum Zählen des Voiumens des in einer Leitung strömenden Gases stromabwärts von einem Druckminderer, die in Folge einen Strömungsleitapparat (10), einen Geschwindigkeitsmesser (20) und einen geräuschlosen Durchsatzbegrenzer (30) aufweist,
**dadurch gekennzeichnet,**
**daß** der Leitapparat (10) dazu geeignet ist, zwischen einer Schelle (51) einer stromaufwärts gelegenen Anschlußleitung (50) zu dem Druckminderer und einer stromaufwärts gelegenen Schelle (204) des Zählers (20) angeordnet zu werden, daß der Begrenzer (30) dazu geeignet ist, zwischen einer stromabwärts gelegenen Schelle des Zählers (20) oder einer dem Zähler (20) zugeordneten Manschette (40) und einer Schelle (71) einer stromabwärts gelegenen Leitung (70) angeordnet zu werden, daß der Leitapparat (10) einen Trägerkranz (101) aufweist, in welchem eine erste, von Löchern (140) perforierte Platte (104) sowie eine erste poröse Platte (103) und ein ringförmiges Abstandsstück (102) angebracht sind, das mit der ersten perforierten Platte (104) zusammenwirkt, und daß der Begrenzer (30) einen stromabwärts gelegenen Flansch (301) aufweist, der eine zweite, von einer definierten Anzahl von kalibrierten Löchern (310) perforierte Platte bildet, deren Gesamtdurchgangsquerschnitt weit unter demjenigen der ersten perforierten Platte (104) liegt, wobei eine zweite poröse Platte (302) und ein stromabwärts gelegener Flansch (303) eine dritte, von Löchern perforierte Platte (330) bilden, deren Gesamtdurchgangsquerschnitt weit über dem Gesamtdurchgangsquerschnitt der zweiten perforierten Platte des stromaufwärts gelegenen Flansches (301) liegt.

2. Vorrichtung nach Anspruch 1, **dadurch gekennzeichnet, daß** die Löcher der ersten perforierten Platte (104) auf homogene Weise auf der gesamten Oberfläche dieser ersten Platte (104) verteilt sind.

3. Vorrichtung nach Anspruch 1 oder Anspruch 2, **dadurch gekennzeichnet, daß** der Trägerkranz (101) in der Nähe seiner stromabwärts gelegenen Seite eine Schulter (112) aufweist, die radial zum Inneren des Trägerkranzes (101) vorsteht, und daß die erste perforierte Platte (104) direkt in Kontakt mit der Schulter (112) gesetzt ist.

4. Vorrichtung nach Anspruch 3, **dadurch gekennzeichnet, daß** die erste perforierte Platte (104), die erste poröse Platte (103) und das Abstandsstück (102) einen Stapel bilden, der gegen die Schulter (112) des Trägerkranzes (101) anliegt, und daß die Summe der Dicken der ersten perforierten Platte (104), der ersten porösen Platte (103) und des Abstandsstücks (102) in axialer Richtung derart leicht über dem Abstand zwischen der stromabwärts gelegenen Schulter (112) des Trägerkranzes (101) und der stromaufwärts gelegenen Seite des Trägerkranzes (101) in axialer Richtung liegt, daß die Klemmung des Stapels (104, 103, 102) zwischen der Schelle (51) der stromaufwärts gelegenen Anschlußleitung (50) und der stromaufwärts gelegenen Schelle (204) des Zählers die erste poröse Platte (103) etwas quetscht.

5. Vorrichtung nach Anspruch 3 oder 4, **dadurch gekennzeichnet, daß** die erste poröse Platte (103) direkt gegen die erste perforierte Platte (104) angeordnet ist und das ringförmige Abstandsstück (102) stromaufwärts von der ersten porösen Platte (103) angeordnet ist.

6. Vorrichtung nach Anspruch 3 oder 4, **dadurch gekennzeichnet, daß** das Abstandsstück (102') direkt gegen die erste perforierte Platte (104') angeordnet ist und die erste poröse Platte (103') stromaufwärts von dem Abstandsstück (102') angeordnet ist.

7. Vorrichtung nach einem der Ansprüche 1 bis 6, **dadurch gekennzeichnet, daß** der stromaufwärts gelegene Flansch (301) des Begrenzers (30) an seiner stromabwärts gelegenen Seite einen Abstandsstückring (313, 313') bildet, der mit dem stromabwärts gelegenen Flansch (303) des Begrenzers (30) zusammenwirkt, um ohne Spiel die zweite poröse Platte (302) gegen die dritte perforierte Platte des stromabwärts gelegenen Flansches (303) geschichtet zu halten.

8. Vorrichtung nach einem der Ansprüche 1 bis 7, **dadurch gekennzeichnet, daß** ein freier Raum (320) zwischen der zweiten perforierten Platte und der zweiten porösen Platte (302) vorgesehen ist und in axialer Richtung eine Dicke in der Größenordnung des Doppelten des Durchmessers d der kalibrierten Löcher (310) der zweiten perforierten Platte des stromaufwärts gelegenen Flansches (301) aufweist.

9. Vorrichtung nach einem der Ansprüche 1 bis 8, **dadurch gekennzeichnet, daß** der einzelne Querschnitt der Löcher (330) der dritten perforierten Platte des stromabwärts gelegenen Flansches (303) über demjenigen der kalibrierten Löcher (310) der zweiten perforierten Platte des stromaufwärts gelegenen Flansches (301) liegt.

10. Vorrichtung nach einem der Ansprüche 1 bis 9, **dadurch gekennzeichnet, daß** der Leitapparat (10) in axialer Richtung eine Dicke in der Größenordnung eines Drittels des Nenndurchmessers D der Leitung aufweist.

11. Vorrichtung nach einem der Ansprüche 1 bis 10, **dadurch gekennzeichnet, daß** der Begrenzer (30) in axialer Richtung eine Dicke in der Größenordnung eines Drittels des Nenndurchmessers D der Leitung aufweist.

12. Vorrichtung nach einem der Ansprüche 1 bis 11, **dadurch gekennzeichnet, daß** sie eine Temperaturnahmemanschette (40) aufweist, die mit einer stromaufwärts gelegenen Schelle (403) und einer stromabwärts gelegenen Schelle (404) versehen ist, die zwischen die stromabwärts gelegene Schelle (205) des Zählers (20) und den stromaufwärts gelegenen Flansch des Begrenzers (30) gelegt ist.

13. Vorrichtung nach einem der Ansprüche 1 bis 12, **dadurch gekennzeichnet, daß** die erste und die zweite poröse Platte (103, 302) eine Dicke zwischen 5 und 20 mm und bevorzugt in der Nähe von 10 mm aufweist.

**14.** Vorrichtung nach einem der Ansprüche 1 bis 13, **dadurch gekennzeichnet, daß** die erste und die zweite poröse Platte aus einem sehr lufthaltigen Nickel-Chrom-Schaumstoff bestehen, dessen Dichte in der Größenordnung von 0,6 g/cm$^3$ liegt und bei dem das Verhältnis zwischen dem eingenommenen Volumen und dem Gesamtvolumen in der Größenordnung von 6 % liegt.

**15.** Vorrichtung nach einem der Ansprüche 1 bis 14, **dadurch gekennzeichnet, daß** die Anzahl n von kalibrierten Löchern (310) der zweiten perforierten Platte durch einen angenäherten Wert des Verhältnisses Q/q zwischen dem globalen Durchsatzkoeffizienten Q des Begrenzers (30), der kleiner oder gleich dem Nenndurchsatz des Zählers (20) ist, und dem Durchsatzkoeffizienten q eines kalibrierten Lochs (310) bestimmt ist, der durch folgende Formel bestimmt ist:

$$q = KS\sqrt{T_c P_o / 2\rho_o T_o}$$

in welcher S der Querschnitt eines kalibrierten Lochs (310) ist, K ein Koeffizient ist, der von der Form des Lochs abhängt, Tc die Temperatur stromaufwärts von dem Begrenzer (30) ist, und $P_o$, $T_o$ und $\rho_o$ die normalen Druck-, Temperatur- und volumenbezogenen Massenbedingungen des betrachteten Gases sind.

**16.** Vorrichtung nach einem der Ansprüche 1 bis 15, **dadurch gekennzeichnet, daß** die Löcher (140) der ersten perforierten Platte (104) einen Durchmesser aufweisen, der zwischen einem Dreißigstel und einem Sechstel des Nenndurchmessers der Leitung liegt.

**17.** Vorrichtung nach einem der Ansprüche 1 bis 16, **dadurch gekennzeichnet, daß** die zweite perforierte Platte des stromaufwärts gelegenen Flansches (301) zwischen 8 und 100 kalibrierte Löcher aufweist, die auf homogene Weise auf drei bis sechs konzentrischen Kränzen verteilt sind.

**18.** Vorrichtung nach einem der Ansprüche 1 bis 17, **dadurch gekennzeichnet, daß** die dritte perforierte Platte des stromabwärts gelegenen Flansches (303) zwischen 20 und 40 kalibrierte Löcher aufweist, die auf homogene Weise auf zwei bis vier konzentrischen Kränzen verteilt sind.

**19.** Vorrichtung nach Anspruch 18, **dadurch gekennzeichnet, daß** die Löcher der dritten perforierten Platte des stromabwärts gelegenen Flansches (303) unterschiedliche Durchmesser aufweisen.

**20.** Vorrichtung nach einem der Ansprüche 1 bis 19, **dadurch gekennzeichnet, daß** die erste perforierte Platte (104) zwischen 25 und 335 Löcher aufweist, die auf vier bis zehn konzentrischen Kränzen verteilt sind.

**21.** Vorrichtung nach einem der Ansprüche 1 bis 20, **dadurch gekennzeichnet, daß** jede zweite und dritte perforierte Platte wenigstens ein zentrales Loch (316; 316'; 335, 335') aufweist.

**22.** Vorrichtung nach einem der Ansprüche 1 bis 21, **dadurch gekennzeichnet, daß** einige kalibrierte Löcher der zweiten perforierten Platte auf selektive Weise durch Schrauben verdeckt sind, um den globalen Durchsatzkoeffizienten Q an das Kaliber des Zählers in Abhängigkeit von der Dichte des Gases anzupassen.

**23.** Vorrichtung nach Anspruch 1 oder Anspruch 2, **dadurch gekennzeichnet, daß** die erste von Löchern (1140) perforierte Platte (1104) durch den zentralen Teil eines stromaufwärts gelegenen Flansches gebildet ist, dessen Umfangsteil einerseits das Abstandsstück (1102) und andererseits einen stromaufwärts gelegenen Teil (1101) des Trägerkranzes bildet, daß die erste poröse Platte (1103) durch das Abstandsstück (1102) gegen eine vierte, von Löchern (1120) perforierte Platte (1112) geschichtet gehalten wird, deren Gesamtdurchgangsquerschnitt weit über dem Gesamtdurchgangsquerschnitt der ersten perforierten Platte (1104) liegt, und daß die vierte perforierte Platte (1112) durch den zentralen Teil eines stromabwärts gelegenen Flansches gebildet ist, dessen Umfangsteil einen stromabwärts gelegenen Teil (1111) des Trägerkranzes bildet.

# FIG.1

EP 0 880 015 B1

Pe    4A

6A    1A    3A    L    2A    7A    Pa

**FIG.2**

Pe    4B

6B    2B    5B    1B    7B    Pa

**FIG.3**

8C    2C

Pe    6C    1C    Pv    9C    7C    Pa

5C

**FIG.4**

FIG.5

FIG.6

FIG.8

FIG.7

FIG.10

FIG.9

EP 0 880 015 B1

FIG.11

FIG.12

FIG.14

FIG.13

EP 0 880 015 B1

FIG.15

FIG.16

EP 0 880 015 B1

FIG.17

FIG.18

EP 0 880 015 B1

FIG.19

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

* EP 0337887 A